(19) Europäisches Patentamt / European Patent Office / Office européen des brevets

(11) EP 2 505 976 B1
(12) **FASCICULE DE BREVET EUROPEEN**

(45) Date de publication et mention
de la délivrance du brevet:
**13.11.2013 Bulletin 2013/46**

(51) Int Cl.:
*G01J 5/08* *(2006.01)*  *G01J 5/58* *(2006.01)*
*G01J 5/00* *(2006.01)*

(21) Numéro de dépôt: **12162129.6**

(22) Date de dépôt: **29.03.2012**

(54) **Mesure de l'émissivité thermique d'un corps**

Messung des Wärmeemissionsvermögens eines Körpers

Measurement of the thermal emissivity of a body

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.03.2011 FR 1152579**

(43) Date de publication de la demande:
**03.10.2012 Bulletin 2012/40**

(73) Titulaire: **Univ Paris Ouest Nanterre la Defense
92000 Nanterre (FR)**

(72) Inventeurs:
- **Herve, Philippe
 75016 Paris (FR)**
- **Rambure, Nicolas
 92000 Nanterre (FR)**

(74) Mandataire: **Regimbeau
20, rue de Chazelles
75847 Paris Cedex 17 (FR)**

(56) Documents cités:
**EP-A2- 0 335 224     WO-A1-99/28715
FR-A1- 2 508 637     JP-A- 5 273 045**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE GENERAL

La présente invention concerne le domaine technique des procédés de mesure à distance de l'émissivité thermique et/ou de la température vraie d'un corps possédant une surface relativement lisse.

On définit la température vraie par opposition à la température de luminance, pour laquelle l'émissivité est prise arbitrairement égale à 1. Par surface relativement lisse, on entend présentant pas ou peu de remous dans le cas d'un liquide, par exemple dans le cas d'un métal en fusion, ou une rugosité faible dans le cas d'un corps solide.

Dans la présente demande de brevet, on se réfère à l'émissivité ou à l'émissivité thermique d'un matériau ou d'un corps, qui désigne le rapport entre l'énergie qu'il rayonne et l'énergie qu'un corps noir rayonnerait à la même température.

ETAT DE L'ART

On connait des procédés de mesure de l'émissivité et/ou de la température vraie d'un corps à surface relativement lisse, par le document FR2508637 au nom de la demanderesse, qui présente un tel procédé au moyen d'un appareillage de mesure, le calcul étant alors indépendant de la distance entre l'appareillage de mesure et le corps visé.

Ce document présente un procédé de mesure en plusieurs étapes :

- une première étape d'acquisition d'une première mesure A de la luminance en un point de la surface du corps sous un angle d'émission θ, le rayonnement thermique sur lequel est effectué la mesure étant polarisé dans une première direction par rapport au plan d'émission ;
- une deuxième étape d'acquisition d'une seconde mesure B de la luminance au même point et sous le même angle θ, le rayonnement thermique sur lequel est effectué la mesure étant polarisé dans une seconde direction par rapport au plan d'émission, cette seconde direction étant différente de la première direction ;
- une troisième étape de détermination de l'émissivité ε au moyen de la formule suivante :

$$\varepsilon = a_1 + (1{,}05 - B/A) \times (9{,}3332 \times 10^{-8} \times \theta^5 - 2{,}6666 \times 10^{-5} \times \theta^4 + 2{,}9883 \times 10^{-3} \times \theta^3 - 0{,}16243 \times \theta^2 + 4{,}18573 \times \theta - 38{,}49)$$

dans laquelle $0{,}82 < a1 < 1{,}12$ ; $0 \geq \theta_1$ $15°$ ; et $75° \leq \theta_2 \leq 105°$. $\theta 1$ étant l'angle de l'axe du polariseur pour la mesure A par rapport à une polarisation perpendiculaire au plan d'émission, et $\theta 2$ étant l'angle de l'axe du polariseur pour la mesure B par rapport à une polarisation perpendiculaire au plan d'émission.

Ce procédé connu exploite une fonction approchée de la valeur de l'émissivité ε en fonction de l'angle θ.

Cependant, il ne permet pas d'obtenir des résultats suffisamment précis dans le cadre de certaines exploitations industrielles, la précision étant trop faible notamment lorsque le matériau dont on cherche à mesurer la température vraie et/ou l'émissivité présente une réflectivité trop importante ; par exemple pour le Nickel, le Titane, l'Aluminium lisse, l'Or, etc...

La présente invention vise à présenter un procédé ne présentant pas ces inconvénients, et permettant de déterminer une valeur d'émissivité ou de température vraie avec une précision élevée, notamment pour de tels matériaux ayant une réflectivité importante.

PRESENTATION DE L'INVENTION

A cet effet, l'invention propose un procédé de mesure de l'émissivité d'un corps à surface sensiblement lisse, comprenant les étapes suivantes :

a) réalisation d'une première mesure A de la luminance en un point de la surface du corps sous un angle d'émission θ, le rayonnement thermique sur lequel est effectué la mesure étant polarisé dans une première direction par rapport au plan d'émission ;
b) réalisation d'une seconde mesure B de la luminance au même point et sous le même angle θ, le rayonnement thermique sur lequel est effectué la mesure étant polarisé dans une seconde direction par rapport au plan d'émission, cette seconde direction étant différente de la première direction ;
c) détermination de l'émissivité ε du corps,
ledit procédé étant caractérisé en ce que

l'angle $\theta$ est compris entre 40° et 50°, et

l'émissivité non polarisée $\varepsilon$ du corps et/ou la composante de l'émissivité dans le plan perpendiculaire $\varepsilon_S$ au plan d'émission et/ou la composante de l'émissivité dans le plan parallèle $\varepsilon_P$ au plan d'émission est déterminée sur la base des fonctions suivantes :

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

avec $\dfrac{B}{A} = R$.

En variante, le procédé présente une ou plusieurs des caractéristiques suivantes, prises indépendamment ou en combinaison :

- l'angle $\theta$ est compris entre 44,5° et 45,5° ;
- l'angle $\theta$ est égal à 45° ;
- le procédé comprend en outre une étape de détermination de la température vraie au point donné de la surface du corps, ladite température étant déterminée à l'aide de la fonction suivante :

$$T = \frac{C_2}{\lambda \ln\left(\dfrac{\varepsilon C_1}{\lambda^5 M} + 1\right)},$$

où C1 et C2 sont les constantes de la loi de Planck : C1 = 3,7415x 10-16 W.m2.sr-1 = 11905×10-16 W.m2, C2 = 14388×10-2 m.K ; $\lambda$ est la longueur d'onde du rayonnement, T est la température vraie de la surface exprimée en Kelvins et M est la luminance reçue à une constante d'appareillage près;
- ladite première direction et ladite seconde direction sont décalées de 90° ;
- le procédé comprend en outre une étape d'affichage de la valeur d'émissivité $\varepsilon$ ainsi déterminée.

L'invention concerne également un procédé de détermination de changements de la structure et/ou de la composition d'un matériau, ledit procédé comprenant :

- une première itération des étapes a), b) et c) du procédé défini précédemment à un premier instant t1, pour déterminer une première valeur d'émissivité $\varepsilon_{t1}$ ;
- une seconde itération des étapes a), b) et c) du procédé défini précédemment à un second instant t2 différent de t1, pour déterminer une seconde valeur d'émissivité $\varepsilon_{t2}$ ;
- une étape de comparaison entre les valeurs $\varepsilon_{t1}$ et $\varepsilon_{t2}$ afin de déterminer les changements de la structure et/ou de la composition du matériau.

L'invention concerne en outre un dispositif de mesure de l'émissivité d'un corps à surface sensiblement lisse, comprenant des moyens de mesure et des moyens de polarisation adaptés pour la réalisation d'une première mesure A de la luminance en un point de la surface du corps sous un angle d'émission $\theta$, le rayonnement thermique sur lequel est effectué la mesure étant polarisé dans une première direction par rapport au plan d'émission, et la réalisation d'une seconde mesure B de la luminance au même point et sous le même angle θ, le rayonnement thermique sur lequel est effectué la mesure étant polarisé dans une seconde direction par rapport au plan d'émission, cette seconde direction étant différente de la première direction, ledit dispositif étant caractérisé en ce qu'il comprend en outre des moyens de calcul adaptés pour calculer l'émissivité ε du corps sur la base des fonctions suivantes :

$$\varepsilon_S(\theta) = 2 - R$$

$$\varepsilon_P(\theta) = 2R - R^2$$

avec $\dfrac{B}{A} = R$ ,

$$\varepsilon(\theta) = 1 - \frac{R^2}{2} + \frac{R}{2}$$

l'angle θ étant compris entre 40° et 50°.

En variante, ce dispositif comprend des moyens d'affichage adaptés pour permettre l'affichage de l'émissivité ε du corps.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- la figure 1 représente schématiquement un corps et le rayonnement émis par un point de ce corps ;
- la figure 2 illustre les étapes d'un procédé selon un aspect de l'invention ;
- la figure 3 illustre les étapes d'un procédé selon un autre aspect de l'invention ;
- les figures 4, 5 et 6 présentent l'évolution de paramètres pour le calcul de l'émissivité polarisée ou non en fonction de l'angle d'émission ;
- la figure 7 illustre schématiquement un dispositif pour la mise en oeuvre de l'invention.

DESCRIPTION DETAILLEE

On cherche à déterminer l'émissivité ε et la température vraie T d'un corps à partir de l'analyse du rayonnement émis par ce corps sous un angle d'émission θ, l'angle d'émission étant défini comme l'angle θ d'inclinaison du rayonnement par rapport à la normale à la surface du corps, au point de mesure M donné.

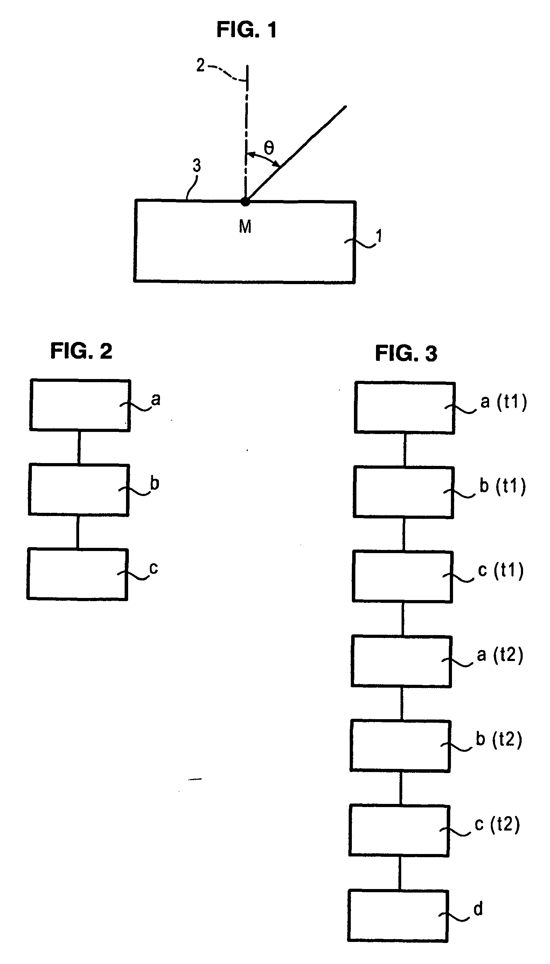

La figure 1 représente schématiquement un corps 1, présentant un point M où est mesuré le rayonnement sous un angle d'émission θ par rapport à la normale 2 à la surface 3 du corps au point de mesure M.

Afin de déterminer l'émissivité ε du corps 1 au point M donné, on exploite les formules connues de la luminance et les relations de Fresnel.

Ces formules, bien que connues de l'Homme de l'art, ne sont exploitées qu'individuellement ou approximées, et ne sont pas combinées de manière avantageuse.

La demanderesse a exploité ces relations pour une inclinaison donnée de 45° afin d'obtenir une formule exacte pour la détermination de l'émissivité d'un matériau.

En considérant une surface opaque et sensiblement lisse d'un corps, dont la normale à cette surface fait un angle θ avec la direction dans laquelle on mesure l'émission de rayonnement de la surface.

Le plan d'émission est défini par la normale à la surface et par le rayon émis.

On appelle P et S les directions d'un champ électrique $\vec{E}$ , ces notations correspondant respectivement à la direction de ce champ parallèle au plan d'émission et perpendiculaire au plan d'émission.

La luminance L mesurée par un instrument placé suivant la direction de l'émission donne un signal M tel que :

$$M(T,\theta) = C \times \varepsilon \times L(T,\theta) = C \times \varepsilon \frac{C_1}{\lambda^5 (e^{\frac{c_2}{\lambda T}} - 1)} \qquad (1)$$

Où C est une constante dépendant de l'appareillage utilisé pour les mesures, C1 et C2 sont des constantes connues de la loi de Planck : C1 = 3,7415×10⁻¹⁶ W.m²·sr⁻¹ = 11905×10⁻¹⁶ W.m² et C2 = 14388×10⁻² m.K, À est la longueur d'onde du rayonnement et T est la température vraie de la surface exprimée en Kelvins.

On considère les émissivités polarisées $\varepsilon_S$ et $\varepsilon_P$, respectivement selon les directions S et P, le rayonnement émis étant polarisé avant d'être analysé par un instrument de mesure comme on le détaillera ultérieurement, et l'émissivité non polarisée $\varepsilon$ avec

$$\varepsilon = \frac{\varepsilon_S + \varepsilon_P}{2} \qquad (2)$$

On remarque une particularité du rayonnement émis pour une valeur de $\theta = 45°$.

En effet, à cette valeur particulière $\theta = 45°$, il découle des relations connues établies par Fresnel que le facteur de réflexion $\rho$ est tel que

$$\rho_P = \rho_S^2 \qquad (3)$$

La conservation de l'énergie implique pour les matériaux opaques les relations suivantes (loi de Kirchhoff) :

$$\begin{aligned} \varepsilon &= 1 - \rho \\ \varepsilon_S &= 1 - \rho_S \\ \varepsilon_P &= 1 - \rho_P \end{aligned} \qquad (4)$$

On désigne par R la polarisation du rayonnement émis, c'est-à-dire

$$R = \frac{\varepsilon_P}{\varepsilon_S} \qquad (5)$$

A partir des relations précédentes, la demanderesse a entrepris de calculer par des formules exactes ces trois émissivités $\varepsilon$, $\varepsilon_S$ et $\varepsilon_P$.

Ainsi, en combinant les relations (2), (3), (4) et (5) précédentes, on obtient

$$R = \frac{\varepsilon_P}{\varepsilon_S} = \frac{1 - \rho_P}{1 - \rho_S} = \frac{1 - \rho_S^2}{1 - \rho_S} = \frac{(1 - \rho_S)(1 + \rho_S)}{1 - \rho_S} = 1 + \rho_S \qquad (6)$$

D'où $\rho_S = R - 1$ et

$$\varepsilon_S(45°) = 2 - R$$
$$\varepsilon_P(45°) = 2R - R^2 \tag{7}$$
$$\varepsilon(45°) = 1 - \frac{R^2}{2} + \frac{R}{2}$$

En fonction de la nature du matériau composant le corps visé, on peut avantageusement exploiter une ou plusieurs de ces équations (7) ; par exemple dans le cas d'un matériau diélectrique, on peut exploiter la relation : $\varepsilon_S$(45°)=2 - R, tandis que pour un matériau conducteur, on peut exploiter la relation $\varepsilon_P$(45°)=2R - $R^2$.

Une fois la valeur $\varepsilon$(45°) obtenue, on peut alors déterminer la température vraie T du corps à partir de l'équation (1) qui permet d'obtenir la relation suivante :

$$T = \frac{C_2}{\lambda \ln\left(\dfrac{\varepsilon C_1 C}{\lambda^5 M} + 1\right)}$$

où In désigne la fonction logarithme népérien et $M = \varepsilon \times C \times L_\lambda^0(T,\theta)$ où C est une constante dépendant de l'appareillage de mesure utilisé pour les étapes a) et b) et $L_\lambda^0(T,\theta)$ est la luminance d'un corps noir dont la formule est donnée par la loi de Planck.

Le tableau 1 ci-après détaille respectivement pour un angle $\theta$=45°, le matériau ciblé, la température du matériau, la longueur d'onde À du rayonnement, la valeur $R = \dfrac{B}{A} = \dfrac{\varepsilon_P}{\varepsilon_S}$, la valeur d'émissivité non polarisée mesurée, la valeur d'émissivité non polarisée théorique et l'erreur relative obtenue pour l'émissivité, respectivement avec un procédé et un dispositif selon l'invention et avec un procédé et un dispositif selon l'art antérieur avec une formule approchée $\varepsilon = 2{,}21 - 1{,}13\dfrac{B}{A}$ pour $\theta$ =45°.

Tableau 1

| Matériau | Température | $\lambda$ | R | Invention | | | Température calculée |
|---|---|---|---|---|---|---|---|
| | | | | $\varepsilon$ 45°mesuré | $\varepsilon$ 45°calculé | Erreur | |
| Acier inoxydable | 600K | 4,0 $\mu$m | 1,881 | 0,163 | 0,167 | 2,50% | 603K |
| Titane | 1500K | 0,6 $\mu$m | 1,728 | 0,471 | 0,47 | 0,10% | 1500K |

| Matériau | Température | $\lambda$ | R | Art antérieur | | | Température calculée |
|---|---|---|---|---|---|---|---|
| | | | | $\varepsilon$ 45°mesuré | $\varepsilon$ 45°calculé | Erreur | |
| Acier inoxydable | 600K | 4,0 $\mu$m | 1,881 | 0,163 | 0,084 | -50% | 650K |
| Titane | 1500K | 0,6 $\mu$m | 1,728 | 0,471 | 0,257 | -44% | 1633K |

On observe que l'erreur relative obtenue grâce au procédé et dispositif selon l'invention est considérablement plus faible qu'avec un procédé et dispositif selon l'art antérieur, la précision sur l'émissivité ayant été améliorée par un facteur 20 pour l'acier inoxydable et un facteur 440 dans le cas du Titane.

On remarque également que les valeurs de température vraie obtenues grâce à l'invention sont sensiblement égales à la température vraie effective, l'écart étant de 3K pour l'acier inoxydable et négligeable pour le Titane, tandis que l'art antérieur conduisait à des écarts respectifs de 50K et 133K.

On remarque de plus que ces relations pour la détermination de l'émissivité ε et la température T donnent des résultats ayant une précision suffisante pour un angle θ sensiblement différent de 45°.

Par exemple, pour un angle θ compris entre 44,5° et 45,5°, on obtient des valeurs d'émissivité et de température avec une précision très satisfaisante en exploitant les formules (7).

A titre d'exemple, pour un angle θ=44,5° et en prenant comme matériau l'acier, on met en oeuvre directement les formules exactes (7) présentées précédemment, et on obtient une valeur d'émissivité ε égale à 0,1212 sachant que l'émissivité à θ=45° est égale à 0,16495, soit une erreur de 0,04375.

De même, pour de l'acier avec un angle d'émission θ=45,5°, on met en oeuvre directement les formules exactes (7) présentées précédemment, et on obtient une valeur d'émissivité ε égale à 0,2051, sachant que l'émissivité à θ=45° est égale à 0,1645, soit une erreur de 0,04015.

De la même manière, pour un angle θ=44,5° et en prenant comme matériau l'acier, on met en oeuvre directement les formules exactes (7) présentées précédemment, et on obtient une valeur d'émissivité $\varepsilon_p$ à 0,1584, sachant que l'émissivité polarisée $\varepsilon_p$ à θ=45° est égale à 0,2150, soit une erreur de 0,0566.

De même, pour de l'acier avec un angle d'émission θ=45,5°, on met en oeuvre directement les formules exactes (7) présentées précédemment, et on obtient une valeur d'émissivité $\varepsilon_p$ égale à 0,2683, sachant que l'émissivité polarisée $\varepsilon_p$ à θ=45° est égale à 0,2150, soit une erreur de 0,0533.

De la même manière, pour un angle θ=44,5° et en prenant comme matériau l'acier, on met en oeuvre directement les formules exactes (7) présentées précédemment, et on obtient une valeur d'émissivité $\varepsilon_S$ égale à 0,0840, sachant que l'émissivité polarisée $\varepsilon_S$ à θ=45° est égale à 0,1140, soit une erreur de 0,03.

De même, pour de l'acier avec un angle d'émission θ=45,5°, on met en oeuvre directement les formules exactes (7) présentées précédemment, et on obtient une valeur d'émissivité εs égale à 0,1422, sachant que l'émissivité polarisée $\varepsilon_S$ à θ=45° est égale à 0,1140, soit une erreur de 0,0282.

On peut donc obtenir des résultats ayant une erreur très satisfaisante et inférieure à 0,06 pour des valeurs de $\theta$ qui ne soient pas strictement égales à 45° ; par exemple des valeurs de $\theta$ comprises entre 44,5° et 45,5° en utilisant directement les formules (7) exactes.

Ces formules (7) peuvent par exemple être exploitées en utilisant un dispositif collecteur tel qu'une lentille ou un miroir collectant les rayons émis entre 40° et 50°, avec un axe du collecteur à plus ou moins 0,5° de la direction à 45°. On peut ainsi exploiter les formules (7) plus particulièrement dans des conditions de faible température, lorsque le rayonnement émis est faible en collectant le rayonnement sur une plage angulaire.

Ces relations sont exploitées via le procédé représenté schématiquement sur la figure 2, et comprenant les étapes détaillées ci-après.

Une étape a de réalisation d'une première mesure A de la luminance en un point de la surface du corps sous un angle d'émission θ, le rayonnement thermique sur lequel est effectuée la mesure étant polarisé dans une première direction par rapport au plan d'émission. Une étape b de réalisation d'une seconde mesure B de la luminance au même point et sous le même angle θ, le rayonnement thermique sur lequel est effectuée la mesure étant polarisé dans une seconde direction par rapport au plan d'émission, cette seconde direction étant différente de la première direction.

Pour ces étapes a et b de réalisation des mesures A et B, l'angle θ est compris entre 44,5° et 45,5°, avantageusement égal à 45°.

Les deux mesures A et B correspondent aux deux valeurs d'émissivité $\varepsilon_S$ et $\varepsilon_P$, à partir desquelles est déterminée la valeur d'émissivité ε au moyen des formules (5) et (7) définies précédemment lors d'une étape de détermination c de l'émissivité ε du corps :

$$\varepsilon = 1 - \frac{\left(\dfrac{B}{A}\right)^2}{2} + \frac{\left(\dfrac{B}{A}\right)}{2} \, ,$$

avec $\dfrac{B}{A} = R$

Une application avantageuse de ce procédé est la détermination de la composition d'un corps. En effet, la valeur d'émissivité dépend notamment de la composition du matériau composant corps ; donc à partir de la valeur d'émissivité ε du corps et en reportant cette valeur sur des tableaux de données connus, on peut en déterminer la composition.

Un exemple spécifique d'application est la détermination de la teneur en Carbone dans un acier.

Une telle détermination est rendue possible du fait de l'utilisation d'une formule exacte pour la détermination de l'émissivité ε du corps, qui présente donc une marge d'erreur très faible dépendant uniquement des instruments de mesure utilisés.

Selon un mode de réalisation particulier, on réalise deux itérations successives des étapes a, b et c à deux instants t1 et t2 distincts donnés, afin d'obtenir deux valeurs $\varepsilon_{t1}$ et $\varepsilon_{t2}$ d'émissivité aux deux instants t1 et t2.

La figure 3 illustre ce mode de réalisation particulier, et présente les étapes a(t1), b(t1), c(t1), a(t2), b(t2) et c(t2) qui sont respectivement les deux itérations des étapes a, b et c aux deux instants t1 et t2, par exemple avec une température T1 à l'instant t1 et une température T2 à l'instant t2.

D'autres variantes sont possibles, dans lesquelles on réalise les étapes a et b de réalisation de mesure préalablement aux étapes c de détermination de l'émissivité. Les étapes sont alors réalisées dans l'ordre suivant : a(t1), b(t1), a(t2), b(t2), c(t1), c(t2).

On réalise ensuite avantageusement une étape d de comparaison des valeurs d'émissivité obtenues $\varepsilon_{t1}$ et $\varepsilon_{t2}$ afin de déterminer si le corps ou plus précisément le matériau composant le corps a fait l'objet d'un changement de structure ou de composition entre les instants t1 et t2. Par exemple, ces valeurs $\varepsilon_{t1}$ et $\varepsilon_{t2}$ peuvent être comparées à des valeurs de référence pour le corps visé, typiquement stockées dans des tables de valeurs, et mises en correspondance avec les structures et/ou compositions de matériau correspondantes

Ce mode de réalisation particulier trouve une application particulière dans le domaine de la métallurgie, et permet de repérer les changements de structure de matériaux. Par exemple, lors de l'écrouissage de l'acier, sa valeur d'émissivité varie de sensiblement 10% ; la mesure de l'émissivité à différents instants permet donc de repérer si l'acier visé est écroui ou non.

De la même manière que précédemment, cette application est rendue possible du fait de l'utilisation d'une formule exacte pour la détermination de l'émissivité ε du corps, qui présente donc une marge d'erreur très faible dépendant uniquement des instruments de mesure utilisés.

On a également vu précédemment que la mesure de l'émissivité permet de déterminer la composition d'un matériau ; le mode de réalisation présenté précédemment permet ainsi de suivre l'évolution de la composition du corps au cours du temps, par exemple dans le cadre d'un procédé de dopage à température constante, ou dans le cas d'une réaction entre plusieurs composants.

En se basant sur les formules exactes (7) on obtient une expression de $\varepsilon$ en fonction des paramètres $\theta$ et $R$, en réalisant un développement limité de rang 5 de ces formules exactes (7) :

$$\varepsilon = A.R^2 + B.R + C,$$

avec

$$A = 7,79076493857760.10^{-7}.\theta^5 - 1,96027201673086.10^{-4}.\theta^4 + 1,99007919804566.10^{-2}.\theta^3$$
$$-1,02196373647953.\theta^2 + 26,6452299073192.\theta - 283,446634830937$$

$$B = -1,55733719964417.10^{-6}.\theta^5 + 3,91732402716047.10^{-4}.\theta^4 - 3,97617853496810.10^{-2}.\theta^3$$
$$+2.041813475081 03.\theta^2 - 53.2232159581321.\theta + 565.191360530041$$

$$C = 7,78030517030012.10^{-7}.\theta^5 - 1,95719507810209.10^{-4}.\theta^4 + 1,98633884330842.10^{-2}.\theta^3$$
$$-1,019944668030 81.\theta^2 + 26,5810737614342.\theta - 280,808547490656$$

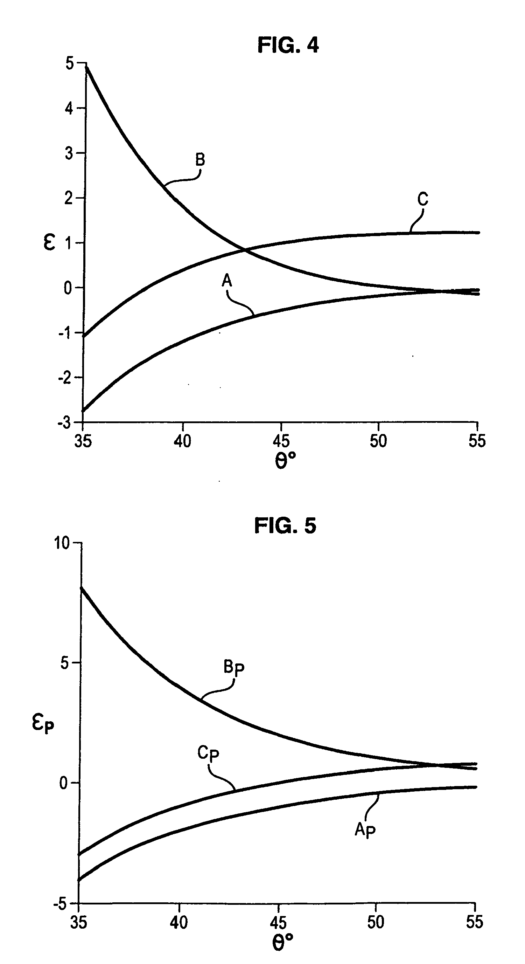

La figure 4 illustre l'évolution des facteurs A, B et C en fonction de l'angle $\theta$. On cherche à déterminer si ces développements limités peuvent être exploités pour le calcul de valeurs précises de l'émissivité. A titre d'exemple, pour un angle θ=40° et en prenant comme matériau l'acier, en exploitant cette formule, on obtient une valeur d'émissivité ε égale à 0,1647 sachant que l'émissivité réelle est égale à 0,16495, soit une erreur relative maximale de 0,15%.

De même, pour de l'acier avec un angle d'émission θ=50°, en exploitant cette formule, on obtient une valeur d'émissivité ε égale à 0,1743, sachant que l'émissivité réelle est égale à 0,17225, soit une erreur relative de 1,2%.

De la même manière, on peut déterminer un développement limité de $\varepsilon_P$ en fonction de θ et R en se basant sur les formules exactes (7) :

$$\varepsilon_P = A_P R^2 + B_P R + C_P,$$

avec

$$A_P = 8,27563181288890.10^{-7}.\theta^5 - 2,08709361179236.10^{-4}.\theta^4 + 2,12612236300478.10^{-2}.\theta^3$$
$$-1,09777824714052.\theta^2 + 28,8807019378483.\theta - 311,930236997299$$

$$B_P = -1,65466046907745.10^{-6}.\theta^5 + 4,17203615292922.10^{-4}.\theta^4 - 4,24914586009842.10^{-2}.\theta^3$$
$$+2,19359148076261.\theta^2 - 57,7009970299658.\theta + 623,093578583233$$

$$C_P = 8,26362185665666.10^{-7}.\theta^5 - 2,08400521563859.10^{-4}.\theta^4 + 2,12248798587546.10^{-2}.\theta^3$$
$$-1,09562651007660.\theta^2 + 28,8176300678984.\theta - 310,182261017597$$

Comme précédemment, la figure 5 illustre l'évolution des facteurs $A_P$, $B_P$ et $C_P$ en fonction de l'angle θ.

A titre d'exemple, pour un angle θ=40° et en prenant comme matériau l'acier, en exploitant cette formule, on obtient une valeur d'émissivité $\varepsilon_P$ égale à 0,2044, sachant que l'émissivité polarisée réelle $\varepsilon_P$ est égale à 0,2044, soit une erreur relative nulle ou sensiblement nulle.

De même, pour de l'acier avec un angle d'émission θ=50°, en exploitant cette formule, on obtient une valeur d'émissivité ε égale à 0,2426, sachant que l'émissivité réelle est égale à 0,2381, soit une erreur relative de 1,85%.

De la même manière, on détermine un développement limité de $\varepsilon_S$ en fonction de θ et R en se basant sur les formules exactes (7) :

$$\varepsilon_S = A_S R^2 + B_S R + C_S,$$

avec

$$A_S = 7,30589806426672.10^{-7}.\theta^5 - 1,83345042166946.10^{-4}.\theta^4 + 1,85403603308662.10^{-2}.\theta^3$$
$$-9,46149225818579.10^{-1}.\theta^2 + 24,4097578767906.\theta - 254,963032664579$$

$$B_S = -1,46001393021087.10^{-6}.\theta^5 + 3,66261190139170.10^{-4}.\theta^4 - 3,70321120983778.10^{-2}.\theta^3$$
$$+1,89003546939945.\theta^2 - 48,7454348862985.\theta + 507,289142476848$$

$$C_S = 7,29698848394217.10^{-7}.\theta^5 - 1,83038494056527.10^{-4}.\theta^4 + 1,85018970074111.10^{-2}.\theta^3$$
$$-9,44262825984909.10^{-1}.\theta^2 + 24,3445174549676.\theta - 251,434833963694$$

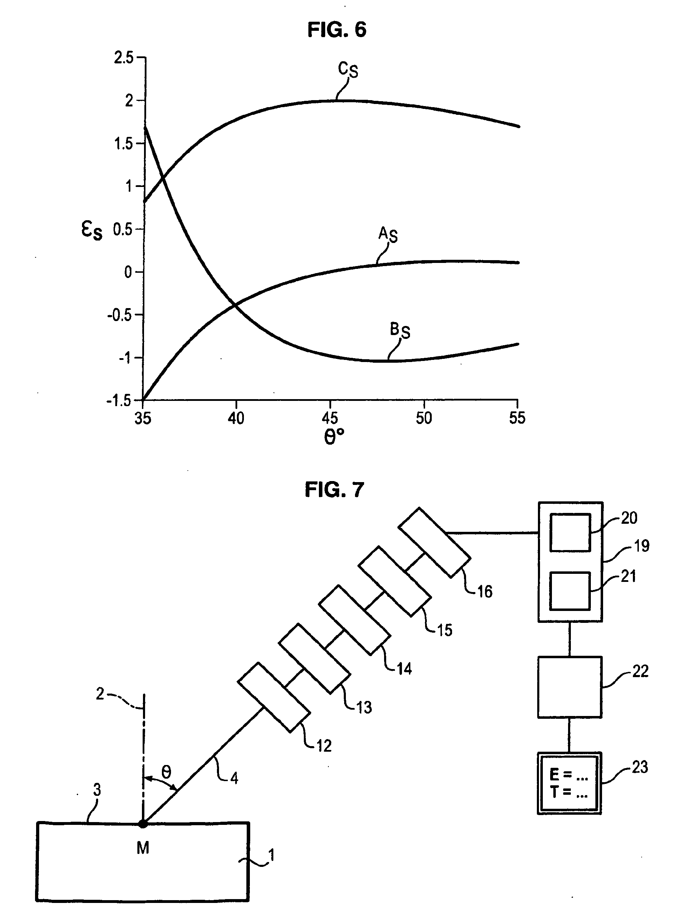

Comme précédemment, la figure 6 illustre l'évolution des facteurs $A_S$, $B_S$ et $C_S$ en fonction de l'angle θ.

A titre d'exemple, pour un angle θ=40° et en prenant comme matériau l'acier, en exploitant cette formule, on obtient une valeur d'émissivité $\varepsilon_S$ égale à 0,1266 sachant que l'émissivité réelle est égale à 0,1255, soit une erreur relative maximale de 0,88%.

De même, pour de l'acier avec un angle d'émission θ=50°, en exploitant cette formule, on obtient une valeur d'émissivité $\varepsilon_S$ égale à 0,1057 sachant que l'émissivité réelle est égale à 0,1064, soit une erreur relative de 0,66%.

On peut donc obtenir des résultats ayant une erreur relative très faible, inférieure à 2% dans les exemples présentés, pour des valeurs de $\theta$ qui ne soient pas strictement égales à 45° ; par exemple des valeurs de $\theta$ comprises entre 40° et 50°, plus particulièrement entre 43° et 47°, ou encore entre 44° et 46° en exploitant des développements linéaires des formules exactes (7) présentées précédemment, ici des polynômes de degré 5. Ces développements linéaires et les mesures ayant une précision élevée qu'ils permettent de réaliser découlent des formules exactes (7) présentées précédemment, les relations approchées de l'état de la technique ne permettant pas d'obtenir un degré de précision aussi important. Ainsi, sur la base des formules (7) présentées précédemment, on peut déterminer l'émissivité d'un corps sur une plage de valeurs plus importante, par exemple de 40° à 50°.

Le procédé est typiquement mis en oeuvre au moyen d'un dispositif 10 tel que représenté schématiquement sur la figure 7.

Le rayonnement 4 émis par le corps 1 sous l'angle θ est typiquement traité par un modulateur 12, puis collecté au moyen d'une lentille avec une ouverture de plus ou moins 5° ou d'un miroir 13, et traverse successivement des moyens de polarisation 14, par exemple un polariseur dichroïque 14, des moyens de filtrage 15, par exemple un filtre interférentiel 15, et des moyens de détection 16, par exemple un dispositif détecteur 16.

Les moyens de polarisation 14 permettent de polariser le rayonnement selon une direction donnée, et peuvent tourner, typiquement d'un quart de tour afin de changer la direction de polarisation entre deux mesures successives.

Les moyens de filtrage 15 filtrent le rayonnement le traversant, et ne laissent passer que le rayonnement ayant la longueur d'onde À requise. La longueur d'onde À est choisie de manière à ce que le rayonnement reçu soit suffisant pour être détecté par les moyens de détection 16. Par exemple, pour des températures élevées, la longueur d'onde À est avantageusement choisie dans le domaine de l'ultraviolet, ce qui permet d'améliorer la précision sur la température de la surface. Pour une longueur d'onde À plus élevée, par exemple dans le domaine de l'infrarouge, l'émissivité dépend plus fortement de la structure ou de la phase du matériau composant le corps visé ; une longueur d'onde À élevée permet donc de favoriser la recherche de la structure d'un matériau.

Le rayonnement 4 polarisé et filtré parvient ensuite aux moyens de détection 16 dont la température est avantageusement stabilisée, par exemple un détecteur quantique tel que Si, InGaAs, PbSe, InSb etc... et fournissant un signal dépendant du rayonnement 4.

Le signal sortant du dispositif détecteur est ensuite traité par un convertisseur 19, comprenant typiquement un amplificateur sélectif 20 ou des moyens de détection synchrone prenant pour référence le modulateur 12, et un convertisseur analogique-numérique 21, permettant ainsi d'obtenir des signaux numériques.

Les signaux numériques ainsi obtenus sont ensuite appliqués en entrée de moyens de calcul 22, qui traitent les signaux correspondant aux mesures A et B pour déterminer la valeur d'émissivité ε et/ou la valeur de la température vraie T au point M du corps 1 au moyen des formules ou développements linéaires présentés précédemment.

Les moyens de calcul 22 sont typiquement un calculateur, un microprocesseur, ou tout autre moyen adapté.

Les signaux correspondant aux valeurs d'émissivité ε et/ou de température vraie T sont ensuite typiquement appliqués à des moyens d'affichage 23, par exemple un écran, où ils sont présentés sous une forme appropriée à l'utilisateur.

Pour des températures supérieures à 1000K, on peut avantageusement utiliser un photomultiplicateur pour réaliser un comptage de photons et donnant directement un signal numérique à la place du modulateur 12, des moyens de détection 16 et du convertisseur 19.

**Revendications**

**1.** Procédé de mesure de l'émissivité d'un corps à surface sensiblement lisse, comprenant les étapes suivantes :

    a) réalisation d'une première mesure A de la luminance en un point de la surface du corps sous un angle d'émission θ, le rayonnement thermique sur lequel est effectué la mesure étant polarisé dans une première direction par rapport au plan d'émission défini par la normale à la surface et par le rayon émis ;

    b) réalisation d'une seconde mesure B de la luminance au même point et sous le même angle θ, le rayonnement thermique sur lequel est effectué la mesure étant polarisé dans une seconde direction par rapport au plan d'émission, cette seconde direction étant différente de la première direction ;

    c) détermination de l'émissivité ε du corps, ledit procédé étant **caractérisé en ce que**

    l'angle θ est compris entre 40° et 50°, et

l'émissivité non polarisée $\varepsilon$ du corps et/ou la composante de l'émissivité dans le plan perpendiculaire $\varepsilon_s$ au plan d'émission et/ou la composante de l'émissivité dans le plan parallèle $\varepsilon_p$ au plan d'émission est déterminée sur la base des fonctions suivantes :

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

avec $\dfrac{B}{A} = R$ .

2. Procédé selon la revendication précédente, dans lequel l'angle $\theta$ est compris entre 44,5° et 45,5°.

3. Procédé selon l'une des revendications précédentes, dans lequel l'angle $\theta$ est égal à 45° et l'émissivité non polarisée $\varepsilon$ du corps et/ou la composante de l'émissivité dans le plan perpendiculaire $\varepsilon_S$ au plan d'émission et/ou la composante de l'émissivité dans le plan parallèle $\varepsilon_P$ au plan d'émission est déterminée en mettant en oeuvre directement les fonctions suivantes :

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

avec $\dfrac{B}{A} = R$ .

4. Procédé selon l'une des revendications précédentes, comprenant en outre une étape de détermination de la température vraie au point donné de la surface du corps, ladite température étant déterminée à l'aide de la fonction suivante :

$$T = \frac{C_2}{\lambda \ln\left(\dfrac{\varepsilon C_1}{\lambda^5 M} + 1\right)},$$

où C1 et C2 sont les constantes de la loi de Planck : C1 = 3,7415x10-16 W.m2.sr-1 = 11905$\times$10-16 W.m2, C2 = 14388x10-2 m.K ; $\lambda$ est la longueur d'onde du rayonnement, T est la température vraie de la surface exprimée en Kelvins et M est égal à C$\varepsilon$ où C est une constante dépendant de l'appareillage de mesure utilisé pour les étapes a) et b).

5. Procédé selon l'une des revendications précédentes, dans lequel ladite première direction et ladite seconde direction sont décalées de 90°.

6. Procédé selon la revendication 1, dans lequel l'émissivité non polarisée $\varepsilon$ du corps et/ou la composante de l'émissivité dans le plan perpendiculaire $\varepsilon_S$ au plan d'émission et/ou la composante de l'émissivité dans le plan parallèle $\varepsilon_P$ au plan d'émission est déterminée par mise en oeuvre d'un développement limité de rang supérieur ou égal à 5 des fonctions suivantes :

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

avec $\dfrac{B}{A} = R$ .

7. Procédé selon la revendication précédente, dans lequel lesdits développements limités sont les suivants :

$$\varepsilon_S = A_S R^2 + B_S R + C_S,$$

avec
$A_S = 7{,}30589806426672.10^{-7}.\theta^5 \quad -1{,}83345042166946.10^{-4}.\theta^4 \quad + \quad 1{,}85403603308662.10^{-2}.\theta^3$
$-9{,}46149225818579.10^{-1}.\theta^2 + 24{,}4097578767906.\theta - 254{,}963032664579 \quad B_S = -1{,}46001393021087.10^{-6}.\theta^5 +$
$3{,}66261190139170.10^{-4}.\theta^4 \quad - \quad 3{,}70321120983778.10^{-2}.\theta^3 \quad +1{,}89003546939945.\theta^2 \quad -48{,}7454348862985.\theta$
$+507{,}289142476848 \quad C_S = 7{,}29698848394217.10^{-7}.\theta^5 \ -1{,}83038494056527.10^{-4}.\theta^4 \ +1{,}85018970074111.10^{-2}.\theta^3$
$-9{,}44262825984909.10^{-1}.\theta^2 +24{,}3445174549676.\theta -251{,}434833963694$

$$\varepsilon_P = A_P R^2 + B_P R + C_P,$$

avec
$A_P = 8{,}27563181288890.10^{-7}.\theta^5 \ -2{,}08709361179236.10^{-4}.\theta^4 + 2{,}12612236300478.10^{-2}.\theta^3 \ -1{,}09777824714052.\theta^2$
$+ \ 28{,}8807019378483.\theta \ -311{,}930236997299 \quad B_P = -1{,}65466046907745.10^{-6}.\theta^5 + \ 4{,}17203615292922.10^{-4}.\theta^4$
$-4{,}24914586009842.10^{-2}.\theta^3 \ +2{,}19359148076261.\theta^2 - \ 57{,}7009970299658.\theta \ + \ 623{,}093578583233 \quad C_P =$
$8{,}26362185665666.10^{-7}.\theta^5 - 2{,}08400521563859.10^{-4}.\theta^4 + 2{,}12248798587546.10^{-2}.\theta^3 \ -1{,}09562651007660.\theta^2 +$
$28{,}8176300678984.\theta \ -310{,}182261017597$

$$\varepsilon = A.R^2 + B.R + C,$$

avec
$A = 7{,}79076493857760.10^{-7}.\theta^5 \ -1{,}96027201673086.10^{-4}.\theta^4 \ +1{,}99007919804566.10^{-2}.\theta^3 \ -1{,}02196373647953.\theta^2 +$
$26{,}6452299073192.\theta \ -283{,}446634830937 \quad B = \ -1{,}55733719964417.10^{-6}.\theta^5 + \ 3{,}91732402716047.10^{-4}.\theta^4$
$-3{,}97617853496810.10^{-2}.\theta^3 \ +2{,}04181347508103.\theta^2 \ -53{,}2232159581321.\theta \ +565{,}191360530041 \quad C =$
$7{,}78030517030012.10^{-7}.\theta^5 \ -1{,}95719507810209.10^{-4}.\theta^4 \ +1{,}98633884330842.10^{-2}.\theta^3 \ -1{,}01994466803081.\theta^2$
$+26{,}5810737614342.\theta \ -280{,}808547490656$

8. Procédé selon l'une des revendications précédentes, comprenant en outre une étape d'affichage de la valeur d'émissivité ε ainsi déterminée.

9. Procédé de détermination de changements de la structure et/ou de la composition d'un matériau, ledit procédé comprenant :

   - une première itération des étapes a), b) et c) selon l'une des revendications précédentes à un premier instant t1, pour déterminer une première valeur d'émissivité $\varepsilon_{t1}$ ;
   - une seconde itération des étapes a), b) et c) selon l'une des revendications précédentes à un second instant t2 différent de t1, pour déterminer une seconde valeur d'émissivité $\varepsilon_{t2}$ ;
   - une étape de comparaison entre les valeurs $\varepsilon_{t1}$ et $\varepsilon_{t2}$ afin de déterminer les changements de la structure et/ou de la composition du matériau.

10. Dispositif de mesure de l'émissivité d'un corps à surface sensiblement lisse, comprenant des moyens de mesure et des moyens de polarisation adaptés pour la réalisation d'une première mesure A de la luminance en un point de la surface du corps sous un angle d'émission $\theta$, le rayonnement thermique sur lequel est effectué la mesure étant polarisé dans une première direction par rapport au plan d'émission défini par la normale à la surface et par le rayon émis, et la réalisation d'une seconde mesure B de la luminance au même point et sous le même angle $\theta$, le rayonnement thermique sur lequel est effectué la mesure étant polarisé dans une seconde direction par rapport au plan d'émission, cette seconde direction étant différente de la première direction, ledit dispositif étant **caractérisé en ce qu'**il, comprend en outre des moyens de calcul adaptés pour calculer l'émissivité non polarisée ε du corps, la composante de l'émissivité dans le plan perpendiculaire $\varepsilon_S$ et parallèle $\varepsilon_P$ au plan d'émission sur la base des fonctions suivantes :

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

avec $\dfrac{B}{A} = R$ .

**Patentansprüche**

1. Verfahren zum Messen des Ausstrahlungsvermögens eines Körpers mit im Wesentlichen glatter Oberfläche, wobei das Verfahren die folgenden Schritte umfasst:

   a) Durchführung einer ersten Messung A der Lichtstärke in einem Punkt der Oberfläche des Körpers unter einem Ausstrahlungswinkel $\theta$, wobei die Wärmestrahlung, an der die Messung durchgeführt wird, in einer ersten Richtung bezüglich der Ausstrahlungsebene, die durch die Normale zu der Oberfläche und durch die ausgesandte Strahlung festgelegt wird, polarisiert ist;
   b) Durchführung einer zweiten Messung B der Lichtstärke in demselben Punkt und unter demselben Winkel $\theta$, wobei die Wärmestrahlung, an der die Messung durchgeführt wird, in einer zweiten Richtung bezüglich der Ausstrahlungsebene polarisiert ist; wobei diese zweite Richtung von der ersten Richtung verschieden ist;
   c) Bestimmung des Ausstrahlungsvermögens ε des Körpers, wobei das Verfahren **dadurch gekennzeichnet ist, dass** der Winkel $\theta$ zwischen 40° und 50° beträgt und das nicht polarisierte Ausstrahlungsvermögen ε des Körpers und/oder die Komponente des Ausstrahlungsvermögens in der zu der Ausstrahlungsebene senkrechten Ebene $\varepsilon_S$ und/oder die Komponente des Ausstrahlungsvermögens in der zu der Ausstrahlungsebene parallelen

Ebene $\varepsilon_P$ auf der Grundlage der folgenden Funktionen bestimmt wird:

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

wobei $\frac{B}{A} = R.$

2. Verfahren nach dem vorhergehenden Anspruch, wobei der Winkel $\theta$ zwischen 44,5° und 45,5° beträgt.

3. Verfahren nach einem der vorhergehenden Ansprüche, wobei der Winkel $\theta$ gleich 45° ist und das nicht polarisierte Ausstrahlungsvermögen $\varepsilon$ des Körpers und/oder die Komponente des Ausstrahlungsvermögens in der zu der Ausstrahlungsebene senkrechten Ebene $\varepsilon_S$ und/oder die Komponente des Ausstrahlungsvermögens in der zu der Ausstrahlungsebene parallelen Ebene $\varepsilon_P$ bestimmt wird, indem direkt die folgenden Funktionen verwendet werden:

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

wobei $\frac{B}{A} = R.$

4. Verfahren nach einem der vorhergehenden Ansprüche, umfassend ferner einen Schritt der Bestimmung der tatsächlichen Temperatur in dem gegebenen Punkt der Oberfläche des Körpers, wobei die Temperatur mit Hilfe der folgenden Funktion bestimmt wird:

$$T = \frac{C_2}{\lambda \ln\left(\frac{\varepsilon C_1}{\lambda^5 M} + 1\right)}$$

wobei C1 und C2 die Konstanten des Planckschen Gesetzes sind: C1 = 3,7415x10[-16] W.m2.sr-1 = 11905x10[-16] W.m2, C2 = 14388x10[-2] m.K; $\lambda$ die Wellenlänge der Strahlung ist, T die tatsächliche Temperatur der Oberfläche ist, ausgedrückt in Kelvin, und M gleich C$\varepsilon$ ist, wobei C eine Konstante, die von der Messapparatur abhängig ist, die für die Schritte a) und b) verwendet wird.

5. Verfahren nach einem der vorhergehenden Ansprüche, wobei die erste Richtung und die zweite Richtung um 90° versetzt sind.

6. Verfahren nach Anspruch 1, wobei das nicht polarisierte Ausstrahlungsvermögen des Körpers und/oder die Komponente des Ausstrahlungsvermögens in der zu der Ausstrahlungsebene senkrechten Ebene $\varepsilon_S$ und/oder die Komponente des Ausstrahlungsvermögens in der zu der Ausstrahlungsebene parallelen Ebene $\varepsilon_P$ durch Verwendung einer beschränkten Entwicklung der Ordnung größer oder gleich 5 der folgenden Funktionen bestimmt wird:

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

wobei $\frac{B}{A} = R$.

7. Verfahren nach dem vorhergehenden Anspruch, wobei die beschränkten Entwicklungen folgende sind:

$$\varepsilon_S = A_S R^2 + B_S R + C_S,$$

wobei
$A_s$ = 7,30389806426672.10$^{-7}$.$\theta^3$ -1,83345042166946.10$^{-4}$.$\theta^4$ +1,85403603308662.10$^{-2}$.$\theta^3$ -9,46149225818579.10$^{-1}$.$\theta^2$ +24,4097578767906.$\theta$ -254,963032664579 $B_s$ =1,46001393021087.10$^{-6}$.$\theta^3$ +3,66261190139170.10$^{-4}$.$\theta^4$ -3,70321120963778.10$^{-2}$.$\theta^3$ +1,89003546939945.$\theta^2$ -48,74543488b2985.$\theta$ +507,289142476848 $C_s$ = 7,29698848394217.10$^{-7}$.$\theta^5$ -1, 83038494056527.10$^{-4}$.$\theta^4$ +1,85018970074111.10$^{-2}$.$\theta^3$ -9,44262825984909.10$^{-1}$.$\theta^2$ +24,3445174549676.$\theta$ -251,434833963694

$$\varepsilon_P = A_P R^2 + B_P R + C_P,$$

wobei
$A_P$ = 8,27563181288890.10$^{-7}$.$\theta^5$ -2,08709361179236.10$^{-4}$.$\theta^4$ +2,12612236300418.10$^{-2}$.$\theta^3$ -1,09777814714052.$\theta^2$ +28,8807019378483.$\theta$ -311,930236997299 $B_P$ = -1,65466046907745.10$^{-6}$.$\theta^5$ +4,17203615292922.10$^{-4}$.$\theta^4$ - 4,249145 86009842.10$^{-2}$.$\theta^3$ +2,19359148076261.$\theta^2$ -57,7009970299658.$\theta$ +623,093578583233 $C_P$ = 8,26362185665666.10$^{-7}$.$\theta^3$ -2,08400521563859.10$^{-4}$.$\theta^4$ +2,12248798587546.10$^{-2}$.$\theta^3$ -1,09562651007660.$\theta^2$ +28,8176300678984.$\theta$ -310,182261017597

$$\varepsilon = A\,R^2 + B\,R + C$$

wobei
$A$ =7,79076493857760.10$^{-3}$.$\theta^5$-1,96027201673086.10$^{-4}$.$\theta^4$ +1,99007919804566.10$^{-3}$.$\theta^3$ -1,02196373647953.$\theta^2$ + 26,6452299073192.$\theta$ -283,446634830937 $B$ = -1,55733719964417.10$^{-4}$.$\theta^5$ + 3,91732402716047.10$^{-4}$.$\theta^4$ -3,97617853496810.10$^{-2}$.$\theta^3$ +2,04181347508103.$\theta^2$ -53,2232159581321.$\theta$ +565,191360530041 $C$ = 7,78030517030012.10$^{-7}$.$\theta^5$ -1,95719507810209.10$^{-4}$.$\theta^4$ + 1,98633884334842.10$^{-2}$.$\theta^3$ -1,01994466803081.$\theta^2$ + 26,5810737614342.$\theta$ - 280,808547490656

8. Verfahren nach einem der vorhergehenden Ansprüche, umfassend ferner einen Schritt der Anzeige des Wertes des auf diese Weise bestimmten Ausstrahlungsvermögens ε.

9. Verfahren zum Bestimmen von Änderungen der Struktur und/oder der Zusammensetzung eines Werkstoffs, wobei das Verfahren Folgendes umfasst:

- eine erste Wiederholung der Schritte a), b) und c) nach einem der vorhergehenden Ansprüche zu einem ersten Zeitpunkt t1, um einen ersten Wert des Ausstrahlungsvermögens $\varepsilon_{t1}$ zu bestimmen;
- eine zweite Wiederholung der Schritte a), b) und c) nach einem der vorhergehenden Ansprüche zu einem zweiten Zeitpunkt t2, der von t1 verschieden ist, um einen zweiten Wert des Ausstrahlungsvermögens $\varepsilon_{t2}$ zu bestimmen;
- einen Schritt des Vergleichens zwischen den Werten $\varepsilon_{t1}$ und $\varepsilon_{t2}$, um Änderungen der Struktur und/oder der Zusammensetzung des Werkstoffs zu bestimmen.

10. Vorrichtung zum Messen des Ausstrahlungsvermögens eines Körpers mit im Wesentlichen glatter Oberfläche, umfassend Messmittel und Polarisationsmittel, die geeignet sind für die Durchführung einer ersten Messung A der Lichtstärke in einem Punkt der Oberfläche des Körpers unter einem Ausstrahlungswinkel θ, wobei die Wärmestrahlung, an der die Messung durchgeführt wird, in einer ersten Richtung bezüglich der Ausstrahlungsebene, die durch die Normale zu der Oberfläche und durch die ausgesandte Strahlung festgelegt wird, polarisiert ist, und die Durchführung einer zweiten Messung B der Lichtstärke in demselben Punkt und unter demselben Winkel θ, wobei die Wärmestrahlung, an der die Messung durchgeführt wird, in einer zweiten Richtung bezüglich der Ausstrahlungsebene polarisiert ist, wobei diese zweite Richtung von der ersten Richtung verschieden ist, wobei die Vorrichtung **dadurch gekennzeichnet ist, dass** sie ferner Rechenmittel umfasst, die dafür geeignet sind, das nicht polarisierte Ausstrahlungsvermögen ε des Körpers, die Komponente des Ausstrahlungsvermögens in der zu der Ausstrahlungsebene senkrechten Ebene $\varepsilon_S$ und parallelen Ebene $\varepsilon_P$ auf der Grundlage der folgenden Funktionen zu berechnen:

$$\varepsilon_S(\theta) = 2 - R$$

$$\varepsilon_P(\theta) = 2R - R^2$$

$$\varepsilon(\theta) = 1 - \frac{R^2}{2} + \frac{R}{2}$$

wobei $\frac{B}{A} = R.$

**Claims**

1. Method for measuring the emissivity of a body with a substantially smooth surface, comprising the following steps:

a) making a first measurement A of the luminance at a point on the surface of the body at an emission angle θ, the thermal radiation on which the measurement is made being polarised in a first direction with respect to the emission plane defined by the normal to the surface and by the ray emitted;
b) making a second measurement B of the luminance at the same point and at the same angle θ, the thermal radiation on which the measurement is made being polarised in a second direction with respect to the emission plane, this second direction being different from the first direction;
c) determining the emissivity ε of the body, said method being **characterised in that**
the angle θ is between 40° and 50°, and
the non-polarised emissivity ε of the body and/or the component of the emissivity in the plane perpendicular $\varepsilon_s$ to the emission plane and/or the component of the emissivity in the plane parallel $\varepsilon_p$ to the emission plane is determined on the basis of the following functions:

$$\varepsilon_s(\Theta) \ = \ 2-R$$

$$\varepsilon_p(\Theta) \ = \ 2R-R^2$$

$$\varepsilon(\Theta) = 1 - \frac{R^2}{2} + \frac{R}{2}$$

with $\dfrac{B}{A} = R$

2. Method according to the preceding claim, in which the angle e is between 44.5° and 45.5°.

3. Method according to one of the preceding claims, in which the angle $\theta$ is equal to 45° and the non-polarised emissivity $\varepsilon$ of the body and/or the component of the emissivity in the plane perpendicular $\varepsilon s$ to the emission plane and/or the component of the emissivity in the plane parallel $\varepsilon p$ to the emission plane is determined using directly the following functions:

$$\varepsilon_s(\Theta) \ = \ 2-R$$

$$\varepsilon_p(\Theta) \ = \ 2R-R^2$$

$$\varepsilon(\Theta) = 1 - \frac{R^2}{2} + \frac{R}{2}$$

with $\dfrac{B}{A} = R$

4. Method according to one of the preceding claims, furthermore comprising a step of determining the true temperature at the given point on the surface of the body, said temperature being determined by means of the following function:

$$T = \frac{C_2}{\lambda \, In\left(\frac{\varepsilon C_1}{\lambda^5 M} + 1\right)}$$

where C1 and C2 are the Planck's law constants: $C1 = 3.7415 \times 10^{-16}$ W.m2. sr-1 = $11905 \times 10^{-16}$ W.m2, $C2 = 14388 \times 10^{-2}$ m.K; $\lambda$ is the wavelength of the radiation, T is the true temperature of the surface expressed in Kelvins and M is equal to $C\varepsilon$ where C is a constant dependent on the measuring equipment used for steps a) and b).

5. Method according to one of the preceding claims, in which said first direction and said second direction are offset by 90°.

6. Method according to claim 1, in which the non-polarised emissivity $\varepsilon$ of the body and/or the component of the emissivity in the plane perpendicular $\varepsilon s$ to the emission plane and/or the component of the emissivity in the plane parallel $\varepsilon p$ to the emission plane is determined using a limited development with a rank greater than or equal to 5 of the following functions:

$$\varepsilon_s(\Theta) = 2-R$$

$$\varepsilon_p(\Theta) = 2R-R^2$$

$$\varepsilon(\Theta) = 1 - \frac{R^2}{2} + \frac{R}{2}$$

with $\dfrac{B}{A} = R$

7. Method according to preceding claim, in which said limited developments are as follows:

$$\varepsilon_s = A_s R^2 = B_s R = C_s,$$

with

$A_S = 7,30589806426672.10^{-7}.\theta^5 -1,83345042166946.10^{-4}.\theta^4 + 1,85403603308662.10^{-2}.\theta^3 -9,46149225818579.10^{-1}.\theta^2 + 24,4097578767906.\theta -254,963032664579$ $B_S = -1,46001393021087.10^{-4}.\theta^5 + 3,66261190139170.10^{-4}.\theta^4 - 3,70321120983778.10^{-2}.\theta^3 +1,89003546939945.\theta^2 -48,7454348862985.\theta + 507.289142476848$ $C_S = 7,29698848394217.10^{-1}.\theta^5 -1,83038494056527.10^{-4}.\theta^4 +1,85018970074111.10^{-2}.\theta^3 -9,44262825984909.10^{-1}.\theta^2 + 24,344\ 5174549676.\theta -251,434833963694$

$$\varepsilon_p = A_p R^2 = B_p R = C_p,$$

with

$A_P = 8,27563181288890.10^3.\theta^5 - 2,08709361179236.10^{-4}.\theta^4 + 2,12612236300478.10^{-2}.\theta^3 -1.09777824714052.\theta^2 +28,8807019378483.\theta -311,930236997299$ $B_P = -1,65466046907745.10^{-6}.\theta^5 +4,17203615292922.10^{-4}.\theta^4 -4,24914586009842.10^{-2}.\theta^3 +2,19359148076261.\theta^2 -57,7009970299658.\theta +623.093578583233$ $C_P = 8,26362185665666.10^{-7}.\theta^5 -2,08400521563859.10^{-4}.\theta^4 +2,12248798587546.10^{-2}.\theta^3 -1,09562651007660.\theta^2 +28,8176300678984.\theta - 310,182261017397$

$$\varepsilon = A\ .R^2 = B\ .R = C,$$

with

$A =7,79076493857760.10^{-3}\theta^1 - 1,96027201673086.10^{-4}\theta^4 +1,99007919804566.10^{-2}\theta^3 -1,02196373647953.\theta^2 + 26,6452299073192.\theta - 283,446634830937$ $B = -1,55733719964417.10^{-6}.\theta^3 + 3,91732402716047.10^{-4}.\theta^4 - 3,97617853496810.10^{-2}.\theta^3 +2,04181347508103.\theta^2 - 35,2232159581321.\theta + 565,191360530041$ $C =77803051703001210^{-7}.\theta^5 -1,95714507810209,10^{-4}.\theta^4 +1,98633884330842.10^{-2}.\theta^3 -1,01994466803081.\theta^2 + 26,5810737614342.\theta -280,808547490656$

8. Method according to one of the preceding claims, furthermore comprising a step of displaying the emissivity value $\varepsilon$ thus determined.

9. Method for determining changes in the structure and/or composition of a material, said method comprising:

- a first iteration of steps a), b) and c) according to one of the preceding claims at a first instant t1, to determine a first emissivity value $\varepsilon_{t1}$;
- a second iteration of steps a), b) and c) according to one of the preceding claims at a second instant t2 different from t1, to determine a second emissivity value $\varepsilon_{t2}$ ;
- a step of comparison between the values $\varepsilon_{t1}$ and $\varepsilon_{t2}$ in order to determine the changes in the structure and/or composition of the material.

10. Device for measuring the emissivity of a body with a substantially smooth surface, comprising measurement means and polarisation means adapted to make a first measurement A of the luminance at a point on the surface of the body at an emission angle $\theta$, the thermal radiation on which the measurement is made being polarised in a first direction with respect to the emission plane defined by the normal to the surface and by the ray emitted, and to make a second measurement B of the luminance at the same point and at the same angle $\theta$, the thermal radiation on which the measurement is made being polarised in a second direction with respect to the emission plane, this second direction being different from the first direction, said device being **characterised in that** it also comprises calculation means adapted to calculate the non-polarised emissivity $\varepsilon$ of the body, the component of the emissivity in the plane perpendicular $\varepsilon_s$ and parallel $\varepsilon_p$ to the emission plane on the basis of the following functions:

$$\varepsilon_s(\theta) \; = \; 2-R$$

$$\varepsilon_p(\theta) \; = \; 2R-R^2$$

$$\varepsilon(\theta) = 1 - \frac{R^2}{2} + \frac{R}{2}$$

with $\frac{B}{A} = R$ .

**FIG. 1**

**FIG. 2**

**FIG. 3**

## FIG. 4

## FIG. 5

## FIG. 6

## FIG. 7

**EP 2 505 976 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2508637